# EUROPEAN PATENT SPECIFICATION

(11) **EP 1 978 681 B1**
(45) Date of publication and mention of the grant of the patent: **17.03.2010**
(21) Application number: 06791219.6
(22) Date of filing: 09.10.2006
(51) Int. Cl.: H04L 12/56, H04L 12/24

(54) **METHODS AND DEVICES FOR JUDGING PW CONNECTION STATE AND NOTIFYING AC CONNECTION STATE**
VERFAHREN UND EINRICHTUNGEN ZUR BEURTEILUNG DES PW-VERBINDUNGSZUSTANDS UND ZUM MITTEILEN DES AC-VERBINDUNGSZUSTANDS
PROCÉDÉS ET DISPOSITIFS DE DÉTERMINATION DE L'ÉTAT DE CONNEXION D'UN PSEUDO-CÂBLE ET DE NOTIFICATION DE L'ÉTAT DE CONNEXION D'UN CIRCUIT ANNEXE

(30) Priority: 17.01.2006 CN 200610033145; 17.01.2006 CN 200610033144
(43) Date of publication of application: 08.10.2008
(73) Proprietor: Huawei Technologies Co., Ltd., Longgang District, Shenzhen Guangdong 518129 (CN)
(72) Inventor: ZHANG, Huachen, Shenzhen Guangdong 518129 (CN); HUO, Ting, Shenzhen Guangdong 518129 (CN)
(74) Representative: Casalonga, Axel
(86) International application number: PCT/CN2006/002637
(87) International publication number: WO 2007/082429

(56) References cited:
- CN-A- 1 391 379
- CN-A- 1 417 986
- CN-A- 1 625 176
- JP-A- 09 130 381
- US-A1- 2004 156 313
- THOMAS D NADEAU CISCO SYSTEMS ET AL: "Pseudo Wire Virtual Circuit Connectivity Verification (VCCV); draft-ietf-pwe3-vccv-05.txt" IETF STANDARD-WORKING-DRAFT, INTERNET ENGINEERING TASK FORCE, IETF, CH, vol. pwe3, no. 5, 1 August 2005 (2005-08-01), XP015040839 ISSN: 0000-0004
- VASILE RADOACA ET AL: "BFD Extensions for PW Exchange of Fault Notifications; draft-radoaca-l2vpn-bfd-inband-oam-00.txt" IETF STANDARD-WORKING-DRAFT, INTERNET ENGINEERING TASK FORCE, IETF, CH, 1 June 2004 (2004-06-01), XP015034156 ISSN: 0000-0004
- THOMAS D NADEAU MONIQUE MORROW CISCO SYSTEMS PETER BUSSCHBACH LUCENT TECHNOLOGIES DAVE ALLAN NORTEL NETWORKS MUSTAPHA AISSAOUI ALC: "Pseudo Wire (PW) OAM Message Mapping; draft-ietf-pwe3-oam-msg-map-03.txt" IETF STANDARD-WORKING-DRAFT, INTERNET ENGINEERING TASK FORCE, IETF, CH, vol. pwe3, no. 3, 1 September 2005 (2005-09-01), XP015040849 ISSN: 0000-0004
- KIREETI KOMPELLA JUNIPER NETWORKS ET AL: "Detecting MPLS Data Plane Failures; draft-ietf-mpls-lsp-ping-12.txt" IETF STANDARD-WORKING-DRAFT, INTERNET ENGINEERING TASK FORCE, IETF, CH, vol. mpls, no. 12, 1 December 2005 (2005-12-01), XP015042556 ISSN: 0000-0004

## Description

### FIELD OF THE INVENTION

The invention relates to the technical field of Packet Switching Networks (PSN), and more particularly, to a method for determining Pseudo Wire (PW) connection state and the associated Provider Equipments (PE) in a PSN.

### BACKGROUND

Presently, operators provide various services in a parallel or overlapping manner, in which various networks have to be built and maintained, and for each of the various services, a different access device is used at a Point of Presence (POP). By doing so, the network plan becomes more complicated, and furthermore, both the constructional cost and the operational cost are rather expensive. When operators are providing various services, it is desirable to seek a method for providing various services over a public PSN so as to reduce the constructional and operational costs.

To provide a universal multi-service network platform, IETF had started the standardization work of "X over PSN" to carry any services over PSN, which is also named as Pseudo-Wire Emulation Edge-to-Edge (abbreviated as PWE3).

The emulated services over PSN may be classified into two types: 1 TO 1 mode in which one PW carries only one emulated service flow, and N TO 1 mode in which one PW carries multiple emulated service flows. When one PW carries multiple emulated service flows, one benefit is brought that the PW header may be utilized more effectively.

The establishment of a dynamic PW is the result of mutual negotiations between PEs at two sides, in which participation of Label Distribution Protocol (LDP) is necessary. PEs at both sides exchange their local PW forwarding states. The local PW forwarding state depends on the state of the AC (Attachment Circuit, or directly connected circuit) service to be emulated, the state of the LDP session with the remote PE and the state of the outer tunnel carrying the PW service. In the N TO 1 mode, the state of the AC service depends on the aggregation of the states of N sub-ACs corresponding to the PW (in the network model of the protocol, multiple PVCs bonded to one PW in the N TO 1 mode are collectively referred to as one AC. For ease of illustration, one PVC of the AC in the N TO 1 mode is referred to as one sub-AC of this AC). If all the sub-ACs corresponding to the PW become DOWN, the AC is in abnormal state or failure state. As long as one of the sub-ACs corresponding to the PW is UP, the state of the AC is UP.

In cases where the AC of the peer PE is DOWN, the AC forwarding table entry at the local PE needs to be removed. Otherwise, the AC service information of the local PE may not reach the final destination even if it reaches the peer PE, and valuable network bandwidth resources are thus wasted in vain.

Notification of the state may be performed in two modes: the Martini mode and the expanded Notification mode.

### I. Martini mode

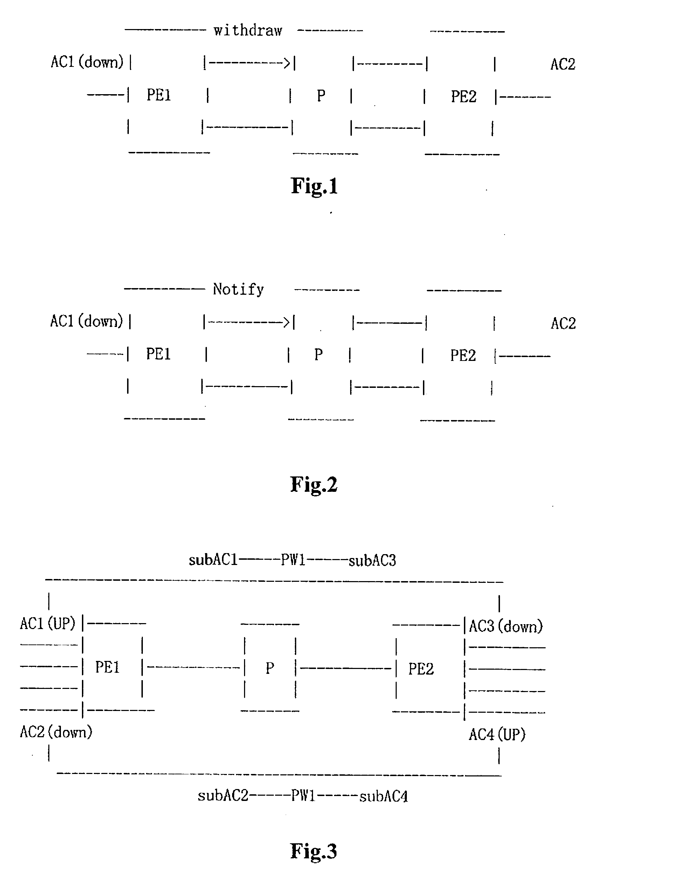

When the AC state, the state of the LDP session with the remote PE and the state of the outer tunnel are all UP, the forwarding state of the local PW is Forwarding Allowed and a Mapping (label mapping) packet is sent. If any one of the three states is DOWN, the forwarding state of the local PW is Forwarding Not Allowed, and a Withdraw (label withdraw) packet is sent so as to withdraw the inner label, i.e., the PW label (a PW label may identify a PW when forwarding is performed). For example, when the PW is UP, the forwarding state of the local PW becomes Forwarding Not Allowed as long as the AC is DOWN, and a Withdraw packet is sent so as to release the protocol, as shown in Fig.1.

### II. Notification mode

After the mapping packet for swapping inner layer labels is sent, the protocol is not released unless the configuration is removed, and only a Notification message is sent to exchange the local PW states of both parties. For example, in the case of PW UP, as long as the AC is DOWN, the forwarding state of the local PW is Forwarding Not Allowed. But at this time, no withdraw packet is sent to release the protocol, and a Notification packet is sent to notify the peer of the fact that the forwarding state of the local PW is Forwarding Not Allowed. In particular, this is implemented by notifying the forwarding code of the local PW, and the inner layer label is reserved. As shown in Fig.2, the Notification packet contains the state code of the local PW.

In the related art, AC state notification is used to determine AC connection state, and the solution may be summarized as follows.

In the Martini mode, whether to send a mapping packet to swap the inner layer labels depends on whether the AC state, the state of the session with the peer PE and the state of the outer tunnel are all UP. If any one of the AC state, the state of the session with the peer PE and the state of the outer tunnel becomes DOWN, a Withdraw packet is sent to withdraw the inner layer label. After a configuration is performed in the Notification mode, as long as the state of the session with the peer PE is UP, the Mapping packet for swapping inner layer labels is sent, regardless of the AC state or the state of the outer layer tunnel. When the AC state or the state of the outer layer tunnel becomes DOWN, only the state code of the local PW is updated and the peer PE is notified of the state code of the local PW via a Notification packet. The main difference between the Notification mode and the Martini mode is: as long as the configuration is not removed, the protocol will not be released in the Notification mode to reclaim the inner layer label and only a Notification packet is sent to notify that the state of the local PW is in Forwarding Not Allowed. Accordingly, when the state becomes UP next time, there is no need to reassign a new label, and only a Notification packet is sent to notify that the state of the local PW becomes Forwarding Allowed.

The related art has limitations as follows.
(1) For a statically configured PW, that is, when the PW is established without participation of LDP protocols and is configured statically, it is impossible to notify the AC state of the peer and the state of the PW itself may not be known either because there is no participation of LDP protocols. Accordingly, the local PE may not know when the AC of the peer PE is DOWN or the PW itself is DOWN, and accordingly the associated AC forwarding table entry or the PW forwarding table entry at the local PE may not be removed. Valuable network bandwidth resources are thus wasted.
(2) For a dynamically configured PW, the Notification mode is advantageous over the Martini mode in that message and packet interactions between the PEs may be reduced. But they have a common shortcoming in that information about a specific AC service pair may not be notified.

As shown in Fig.3, it is assumed that subAC1-subAC3 and subAC2-subAC4 are two service streams respectively and are multiplexed over PW1 in the N to 1 mode, subAC1 and subAC2 are connected to different ports of PE1, and the combination of their states forms the AC state at PE1. subAC3 and subAC4 are connected to different ports of PE2, and the combination of their states forms the AC state at PE2. At PE1, when the state of a LDP session with the remote PE is UP and the state of the outer tunnel is UP, if the state of subAC1 turns to UP from DOWN, the AC state at PE1 is UP. Then, the local PW forwarding state indicates that forwarding may be performed. A Mapping packet or a Notification packet is sent, to notify that the state of the local PW is UP now. At PE2, when both the state of a session with the peer PE and the state of the outer tunnel are UP, if the state of subAC4 changes to UP from DONW, the AC state at PE2 becomes UP. Then, the local PW forwarding state at PE2 indicates that forwarding may be performed. Because the PW forwarding states for the local and peer PEs are both Forwarding Allowed, the state of the PW is UP and is delivered to the logic forwarding table entry. But in fact, subAC1 and subAC3 forms a service pair. After the service information of subAC1 arrives at PE2 through PW1, the service packet of subAC1 still will be discarded by PE2 because the subAC3 state is DOWN. Thus, it can be seen that in this case, neither the Martini mode nor the Notification mode can be used to notify correct information about the service pair of the AC. The service information of subAC1 may not reach its final destination even it reaches PE2 through PW1, and thus valuable network bandwidth resources are wasted.

The OAM (Operation, Administration and Maintenance) function plays an important role in public networks, with which the network operations may be simplified, the network performance may be monitored and the network operation cost may be reduced. The OAM function is especially important in a network providing QOS guarantee. As a key technology for the next generation scalable networks, multiple protocol label switching (MPLS) supports QOS and various network services and requires the OAM function. All MPLS OAM packets provided in ITU-T-Y.1711 use a globally known reserved label value 14, referred to as OAM Alert Label, which is distinguished from ordinary MPLS user traffic packets.

The OAM fault detection function is based on periodical transmissions of Connectivity Verification (CV) packet or Fast Failure Detection (FFD) packet from the ingress to the egress of the LSP. At the ingress, an OAM packet is encapsulated into an MPLS packet, that is, the outer layer label of the packet is the outgoing label of LSP at the node, the inner layer label is valued at 14 (OAM Route alert label), and the remainder is the payload of the OAM packet. When the egress detects a fault, it will send a Backward Defect Indication (BDI) packet through the backward channel. In this way, the state of the current LSP may be known at both the ingress and egress nodes.

The OAM packet payload includes OAM function type, data of specific function type and an ordinary BIP 16 error detection mechanism. To increase the processing speed and support the minimum packet length of the current two layer technology such as Ethernet, the minimum payload length of all OAM packets has to be 44 bytes.

The MPLS OAM mechanism proposed in Y.1711 involves two types of packets for connectivity verification: CV and FFD packets. A CV packet is sent every second, and a FFD packet is sent every 50 ms by default, and may be set to one FFD packet every 10 ms, 20 ms, 100 ms, 200 ms or 500 ms. The MPLS OAM fault detection function is based on periodical transmissions of Connectivity Verification (CV) packet or Fast Failure Detection (FFD) packet from the ingress to the egress on the LSP.

A PW in the data plane may be regarded as including two opposite LSPs. Similar to MPLS LSP, a detection technique is also needed for the PW to detect the availability of the connection. However, the OAM fault detection provided in ITU-T Y.1711 is not suitable for PW state detection. In the data forwarding plane, MPLS LSP is unidirectional. Fault detection in the data plane may be achieved by the "ingress transmission and egress reception" detection method as described in Y.1711. That is, the ingress transmits an OAM detection packet periodically to the egress and the egress determines whether the detection packet is received within a defined time period. Such a detection method can only work well with connectivity detection of a unidirectional link, and is not suitable for PW which is a bidirectional link. With the current Y.1711 OAM detection method, detection can be achieved in only one direction on the data plane and PW detection is not possible.

Thus, it can be seen that notification of sub-AC state and detection of PW state is not possible in the related art.
Document XP015040839, IETF STANDARD-WORKING-DRAFT, INTERNET ENGINEERING TASK FORCE, IETF, CH, vol. pwe3 no. 5, 01-08-2005 THOMAS D NADEAU CISCO SYSTEMS ET AL: "Pseudo Wire Virtual Circuit Connectivity Verification (VCCV);
draft-ietf-pwe3-vccv-05.txt" discloses a Virtual Circuit Connection Verification (VCCV) which provides a control channel that is associated with a pseudo wire (PW), as well as the corresponding operations and management functions such as connectivity verification to be used over that control channel. VCCV applies to all supported access circuit and transport types currently defined for PWs.
Document XP015034156, IETF STANDARD-WORKING-DRAFT, INTERNET ENGINEERING TASK FORCE, IETF, CH, 01-06-2004 VASILE RADOACA ET AL: "BFD Extensions for PW Exchange of Fault Notifications; draft-radoaca-l2vpn-bfd-inband-oam-00.txt" discloses a Bidirectional Forwarding Detection, BFD, mechanism that was original designed to detect failures in communication with a forwarding plane next hop. BFD operates on top of any data protocol being forwarded between two systems. This document describes how to use the BFD mechanism for exchanging OAM notifications.
This proposal is presented as an alternative to the LDP Status
Mechanism described in draft-ietf-pwe3-control-protocol-06.txt.
Document XP015042556, IETF STANDARD-WORKING-DRAFT, INTERNET ENGINEERING TASK FORCE, IETF, CH, vol. mpls no. 12, 01-12-2005 KIREETI KOMPELLA JUNIPER NETWORKS ET AL: "Detecting MPLS Data Plane Failures; draft-ietf-mpls-Isp-ping-12.txt" describes a simple and efficient mechanism that can be used to detect data plane failures in Multi-Protocol Label Switching (MPLS) Label Switched Paths (LSPs).

### SUMMARY

The related art is disadvantageous in that in the N to 1 mode for emulating services over PSN, the OAM fault detection is not suitable for PW state detection and correct information about a pair of emulated services may not be obtained. In view of these problems, the invention provides a method for determining PW connection state and a method for notifying AC connection state and the associated provider equipments.

To solve the above problems, the solution according to the disclosure is as follows.

A method is provided for determining Pseudo Wire, PW, connection state in a packet switching network, the packet switching network being provided with Pseudo Wire Operation, Administration, and Maintenance, PW-OAM, packets for detection of connection state of a PW, the method including:
transmitting, by a first PE, a PW-OAM request packet over a PW link between the first PE and a second PE, wherein the PW-OAM request packet contains three layers of labels and a PW OAM packet, the outer layer being an LSP label, the middle layer being a PW label, the inner layer being an OAM label, the LSP label being used for a pop operation and the PW label being used for a swap operation;
receiving, by the second PE, the PW-OAM request packet;
performing a pop operation on the LSP label, and looking up a hardware Incoming Label Map, ILM, table with the PW label;
determining whether the PW is configured with OAM function according to an OAM flag added to the ILM table, the OAM flag indicating whether an associated PW is configured with OAM function;
processing all the forwarding normally if the PW is not configured with OAM function;
determining whether the next layer of label exists if the PW is configured with OAM function;
if the next layer of label exists and is a stack-bottom label with a value equal to 14 to indicate that the captured packet is a PW-OAM packet, performing a swap operation on the PW-OAM packet, so as to obtain new LSP and PW labels;
sending, by the second PE, the PW OAM packet back to the first PE via the new LSP and PW labels;
detecting, by the first PE, whether a PW-OAM reply packet is received within a preset time period, wherein the PW-OAM reply packet assembles the PW OAM packet; and
determining, by the first PE, that the PW between the first PE and the second PE is normal when the PW-OAM reply packet is received within a preset time period.

Here, PW OAM packets including the PW-OAM request packet and the PW-OAM reply packet are provided for detection of connection state of the PW.

The local PE transmits a PW-OAM packet constantly via the PW link and determines whether the PW fails by detecting whether the transmitted packet is returned within the preset time period.

The method may further include: setting a PW availability flag in a PW hardware forwarding table to constrain the forwarding of a data packet, the PW availability flag being controlled by the detection result, forwarding the data packet normally when the flag is set to indicate that the PW is available, and not forwarding the data packet when the flag indicates that the PW is unavailable.

The peer PE performs the swap operation on the PW label by:
establishing a swap table entry for the inner-layer label and delivering the swap table entry to hardware; and
performing the swap operation with the table entry after capturing the PW OAM packet.

A Provider Equipment, PE, for use with the above method in a packet switching network includes:
a transmitting module,
a receiving module, and
an OAM module coupled to the transmitting module and the receiving module, configured to operate the transmitting module to transmit a PW-OAM request packet, wherein the PW-OAM request packet contains three layers of labels and a PW OAM packet, the outer layer being an LSP label, the middle layer being a PW label, the inner layer being an OAM label, the LSP label being used for a pop operation and the PW label being used for a swap operation;
after a packet is received by the receiving module and delivered to the OAM module for processing, if the packet is a reply to the transmitted OAM packet and is received within a preset time period, the PW between the PEs is determined to be normal, wherein the PW-OAM reply packet assembles the PW OAM packet.

A Provider Equipment, PE, for use with the above method in a packet switching network includes:
a transmitting module,
a receiving module, and
an OAM module coupled to the transmitting module; in which
a PW-OAM request packet is received by the receiving module and delivered to the OAM module for processing, wherein the PW-OAM request packet contains three layers of labels and a PW OAM packet, the outer layer being an LSP label, the middle layer being a PW label, the inner layer being an OAM label, the LSP label being used for a pop operation and the PW label being used for a swap operation, and
the OAM module is configured to operate the transmitting module to return the PW-OAM reply packet to the transmitting side, wherein the PW-OAM reply packet assembles the PW OAM packet.

There is also provided with a packet switching network including at least two Provider Equipments, PEs, **characterised in that** the packet switching network is provided with Pseudo Wire Operation, Administration, and Maintenance, PW-OAM, packets for detection of connection state of a PW, in which:
a first PE is adapted to transmit a PW-OAM request packet over a PW link between the first PE and a second PE, wherein the PW-OAM request packet contains three layers of labels and a PW OAM packet, the outer layer being an LSP label, the middle layer being a PW label, the inner layer being an OAM label, the LSP label being used for a pop operation and the PW label being used for a swap operation;
the second PE is adapted to:
   receive the PW-OAM request packet,
   perform a pop operation on the LSP label, and look up an Incoming Label Map, ILM, table with the PW label;
   determine whether the PW is configured with OAM function according to an OAM flag added to the ILM table, the OAM flag indicating whether an associated PW is configured with OAM function;
   process all the forwarding normally if the PW is not configured with OAM function;
   determine whether the next layer of label exists if the PW is configured with OAM function;
   if the next layer of label exists and is a stack-bottom label with a value equal to 14 to indicate that the captured packet is a PW-OAM packet, perform a swap operation on the PW-OAM packet, so as to obtain new LSP and PW labels;
   send the PW OAM packet back to the first PE via the new LSP and PW labels; and
   the first PE is adapted to detect whether the PW-OAM reply packet is received within a preset time period, and to determine that the PW between the first PE and the second PE is normal when the PW-OAM reply packet is received within a preset time period.

For the method of determining PW connection state and the associated PE, the invention is advantageous in that the OAM fault detection proposed in Y.1711 is extended in the invention so that the network performance monitor and fault alert mechanism with special OAM labels may be applicable to PW. Then, connectivity detection in the PW data plane may be performed effectively, and determination of the PW connectivity may be achieved.

The detection method in the present invention may be used for general purposes. During the whole detection process, the PW-OAM packet is processed without involving any specific services. The dedicated line or link emulated by the detected PW may be any one provided in IEEE PWE3 draft, such as Eth/TDM/FR/ATM.

For the method of notifying AC connection state and the associated PE, the invention is advantageous in that notification of AC state may be achieved by extending the OAM type defined in ITU-T-Y.1711. When the PW bonding fashion is ATM N to 1, once there is a sub-AC state change, the peer is notified by means of the OAM packet which may carry fields for identifying VPI/VCI (or VLAN ID) of the sub-AC. By doing so, the following defects of the related art may be solved: the PW state UP caused by AC UPs not belonging to a same pair of services may not correctly reflect the packet forwarding condition; as a result, even if the AC information for one side reaches the PE at the other side via a PW, the forwarding may not continue, and the AC information needs to be discarded by the PE; and the processing resources of the nodes along the way and the valuable network bandwidth resources are thus wasted.

In the present invention, AC-OAM packets are introduced to facilitate acquisition of precise information about the emulated service pair and reject the PW UP caused by sub-AC UPs not belonging to the same emulation service pair. In this way, the PW state is strictly consistent with the actual forwarding state, and the effectiveness of PW forwarding is improved. Service transmissions unable to find ultimate connectivity will no longer waste the processing resources of the nodes along the way and the valuable network bandwidth resources. Furthermore, the problem that static PW may not notify AC state, is solved.

### BRIEF DESCRIPTION OF THE DRAWINGS

Fig.1 is a diagram illustrating the principle with which state notification is performed in the Martini mode;

Fig.2 is a diagram illustrating the principle with which state notification is performed in the Notification mode;

Fig.3 is a diagram illustrating the connection relationship that a PW carries multiple emulated service flows;

Fig.4 is a diagram illustrating the PW detection principle according to an embodiment of the invention;

Fig.5 is a diagram illustrating the PW-OAM detection process according to an embodiment of the invention;

Fig.6 is a diagram illustrating the AC state notification principle according to an embodiment of the invention;

Fig.7 is a flow chart illustrating the AC state notification transmission process according to an embodiment of the invention; and

Fig.8 is a flow chart illustrating the AC state notification reception process according to an embodiment of the invention.

### DETAILED DESCRIPTION

Detailed descriptions will be made below to the invention with reference to specific embodiments and accompanying drawings.

First, descriptions will be made to the method for determining PW connection state and the associated PE.

At present, there are two ways for implementation of OAM function. In the first way, OAM labels are defined for network performance monitor and fault alert, which are similar to the OAM cells in ATM. In the second way, network faults are discovered and located by simulating ICMP (Internet Control Message Protocol) echo request and ICMP reply, which is similar to Ping in conventional IP networks. In the present invention, the above two OAM implementations are combined, that is, PW fault detection is performed by defining dedicated OAM labels and simulating ICMP echo request and ICMP reply.

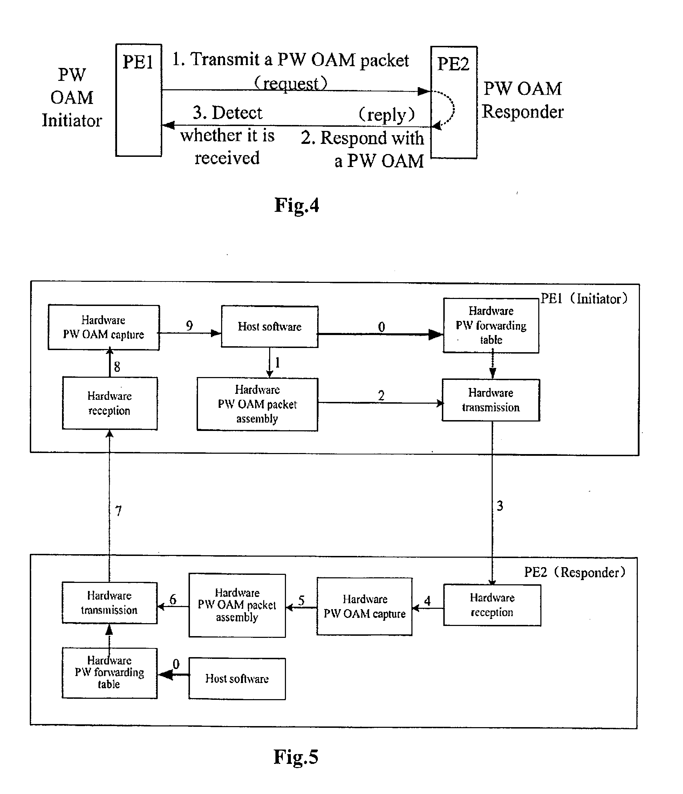

As shown in Fig.4, PE1 is configured to transmit an OAM request packet and is thus referred to as PW-OAM initiator, and PE2 is configured to respond with an OAM reply packet upon receipt of the OAM request packet and is thus referred to as PW-OAM responder. With back and forth of the PW-OAM packets on the PW link to be detected, the PW is determined to be normal when PE1 receives the packet within a preset time period, and a fault alert is generated when PE1 fails to receive the packet within the preset time period. The steps involved are as follows.
1. The PW-OAM initiator sends a PW-OAM request packet.
2. Upon receipt of the PW-OAM request packet, the PW-OAM responder responds with a PW-OAM reply packet.
3. The PW-OAM initiator determines whether the PW-OAM reply packet is received within a preset time period. If the PW-OAM reply packet is received within the preset time period, the PW is determined to be normal. Otherwise, if no PW-OAM reply packet is received within a preset time period, a fault alert is generated.

As shown in Fig.5, a PW-OAM detection process includes the following steps.
(0, the precondition) A PW is established between PE1 (the initiator) and PE2 (the responder). Forwarding table entries are generated by both host software, and delivered to the hardware (in this way, forwarding may be performed by directly accessing the hardware table entries without accessing the software). OAM function is configured at PE1 and PE2 respectively for detecting the established PW.
(1) PE1 starts an OAM detection timer and initiates OAM detection.
(2) PE1 host software delivers the OAM labels to the hardware and assembles an OAM packet.
(3) PE1 transmits the OAM packet according to the PW hardware forwarding table.
(4) PE2 receives and parses the OAM packet, and handles the OAM packet to the OAM hardware module for processing.
(5) PE2 OAM hardware module analyzes the packet, and handles OAM packet to the OAM packet assembly module for processing.
(6) PE2 assembles an OAM packet.
(7) PE2 sends the assembled OAM packet.
(8) PE1 receives and parses the assembled OAM packet, and handles OAM packet to the OAM hardware module for processing.
(9) The packet is delivered to the host software, and a detection is completed.

A specific description will be.made below to the process at the PW-OAM initiator.

### (I) Function

To detect the bidirectional PW connectivity on the data plane, the OAM packet has a round trip over the PW link. The OAM packet is sent from the initiator PE. After a round trip over the link, the OAM packet is received at the initiator PE. In this manner, the processes of the LSP OAM ingress and egress may be integrated into one PE device. The transmission is originated from the initiator and the detection is also made at the initiator. In other words, the LSP OAM transmission, reception and detection mechanisms are migrated and combined directly, to form the OAM function of the PW initiator.

### (II) PW-OAM packet

A novel OAM detection packet is defined for detection of PW connection state in the present invention, i.e., PW-OAM packet, which is similar to the CV and FFD packets in LSP OAM. The Function Type of the packet is 0x08. The format of the packet is shown in Table 1.

**Table 1**

| Function Type ( 0x08 ) | Reserved |
|---|---|
| 1 byte | 48 bytes |

The initiator transmits an OAM packet constantly over the PW link, and determines locally whether the transmitted packet is returned within a preset time period, so as to detect whether the PW fails.

### (III) PW Availability Flag: PW_Avail_Flag

In the present invention, a new PW Availability Flag, i.e., PW_Avail_Flag, is defined in the existing PW hardware forwarding table (NHLFE), for constraining the forwarding of the PW date packet. The format of the PW hardware forwarding table is shown in Fig.2.

**Table 2**

| NHLFE-id | PW Label | LSP Label | ..... | PW_Avail_Flag |
|---|---|---|---|---|
| | | | ..... | |
| | | | ..... | |

If PW_Avail_Flag is equal to 1, the PW is available and data may be forwarded normally. Otherwise, if PW_Avail_Flag is equal to 0, it indicates that the PW fails and the data packet needs to be discarded. The flag is controlled based on the detection result. When it is detected that the PW fails, the flag is set to 0 and the data is prevented from being forwarded. Conversely, when it is detected that the PW returns to be normal, the flag is set to 1 and the data may be forwarded normally.

It is to be noted that PW_Avail_Flag only constrains data packets except the OAM packet. For OAM packets, this flag is invalid. That is, the flag may not be used to control the forwarding of the OAM packets. OAM packets are also forwarded by looking up the table. If PW_Avail_Flag affects the forwarding of the OAM packets, this flag fails to be set to 1.

Detailed descriptions will be made below to the process at the PW-OAM responder.

### (I) The inverse forwarding of the PW-OAM packet

A PW-OAM packet includes three layers of labels. The outer layer is used for LSP forwarding, the middle layer is used for PW forwarding, and the inner layer is OAM label: 14. The format of the PW-OAM packet is shown in Table 3.

**Table 3**

| | | | | |
|---|---|---|---|---|
| Link Layer | LSP Label | PW Label | OAM Label (14) | PW-OAM Packet |

LSP OAM performs a pop operation on the LSP forwarding label at the peer, and label 14 is processed for pop operation by the OAM module, and the final detection is made at the host software. But PW-OAM is not detected here, and the OAM packet is sent back to the initiator. After the responder receives the OAM packet, a pop operation is still performed on the LSP label and a swap operation is performed on the PW label, so as to obtain new PW label and LSP label. Via the newly obtained labels, the OAM packet is sent back. This process is referred to as PW-OAM inverse forwarding here. With the detection method of the present invention, the detection procedure is similar to the Ping operation. The operations at the responder involve a process of parsing and assembling, including: receiving, parsing, assembling and transmitting.

### (II) The PW-OAM detection flag: OAM_Flag

In a PW-OAM inverse forwarding process, all packets are processed by hardware, with no participation of any software, so as to achieve a high forwarding efficiency. In this way, after PW-OAM is configured, the responder has to establish a swap table entry for inner labels and delivers it to hardware, so that upon receipt of the OAM packet, the responder may send it back to the initiator.

To perform inverse forwarding, an OAM flag (or, OAM_Flag) is added to the hardware ILM (Incoming Label Map) according to the invention. OAM_Flag is also denoted as OAM_F, and it indicates whether the PW is configured with OAM. For example, if the PW is configured with OAM, OAM_F is set to 1; otherwise, it is set to 0. The structure of an ILM table supporting PW-OAM is shown in Table 4.

**Table 4**

| ILM Table | | | | | | |
|---|---|---|---|---|---|---|
| Label | | OAM_F | 0 | | OP | PCP ...... |
| | | | | | | |
| | | | 1 | Next Layer Label is not 14 | | SWAP ... ... |
| | | | | Next Layer Label is 14 | SWAP NHLFE-id[] The detected PW[] | |

### (III) The inverse forwarding process

As described above, the PW-OAM inverse forwarding may be implemented as follows.

When the responder receives a PW packet, a pop operation is first performed on the outer LSP label and then the ILM table is looked up according to the PW label. After a hit is found, the OAM_F value is checked.

If OAM_F is equal to 0, it indicates that PW is not configured with OAM, and all the forwarding are processed normally.

If OAM_F is equal to 1, it indicates that PW is configured with OAM, and the next layer label is to be determined. If there exists the next layer label and it is at the bottom of the stack with a value of 14, it indicates that the captured packet is an OAM packet. A swap operation is performed on the OAM packet to obtain new LSP label and PW label. Then, an OAM packet is reassembled and sent back to the initiator.

The invention also provides a PE based on the above method of determining PW connection state in a packet switching network, such as PE1 shown in Fig.5, including: a transmitting module, a receiving module and an OAM module (shown as the dotted block in PE1 in Fig.5) coupled to the transmitting module and the receiving module. The OAM module is configured to operate the transmitting module to transmit a PW-OAM request packet. After a packet is received by the receiving module, the packet is delivered to the OAM module for processing. If the received packet is a reply to the transmitted OAM request packet that is received within a preset time period, the PW between the PEs is determined to be normal.

The invention also provides another PE based on the above method of determining PW connection state in a packet switching network, such as PE2 shown in Fig.5, including a transmitting module, a receiving module, and an OAM module (shown as the dotted block in PE2 in Fig.5) coupled to the transmitting module. A PW-OAM request packet is received by the receiving module and delivered to the OAM module for processing. The OAM module is configured to operate the transmitting module to return a PW-OAM reply packet to the transmitting side.

With the above methods and PEs, the connectivity detection of the PW data plane may be achieved effectively. In this case, if the PW state UP is caused by AC UPs not belonging to the same pair of services, the PW state may not reflect the actual forwarding condition. As a result, even if the AC information for one side reaches the PE at the other side via a PW, the forwarding may not continue, and the AC information needs to be discarded by the PE. In this manner, the processing resources of the nodes along the way and the valuable network bandwidth resources are wasted.

A description will be given below to the method and PE for notification of AC connection state.

The disclosure provides a method for notification of AC connection state in PSN, including the following contents.

### I. AC-OAM packet

According to the invention, the OAM type defined in ITU-T-Y.1711 is extended. AC-OAM packet is added to notify the peer when there is a change in the local AC state. The transmitted AC-OAM packet carries a VPI/VCI field for identifying a sub-AC. A byte indicates the state of a sub-AC, that is, the state of a PVC. The Function Type of the AC-OAM packet is 0x09. Other Reserved field is 0x00. The format is shown in Table 5.

**Table 5**

| Function Type(0x09) | Reserved (all 0x00) | Sub-AC state code | VPI/VCI | Reserved |
|---|---|---|---|---|
| 1 byte | 2 bytes | 1 byte | 4 bytes | 48 bytes |

Instead of detecting the connectivity of a sub-AC, AC-OAM is to notify the peer of a change in the local sub-AC state by means of the OAM packet.

### II. AC hardware forwarding table

To control the effectiveness of forwarding the emulated data over the PW, an AC-PW bonding relationship is added to the hardware table existing at the PE, to emulate the effectiveness of data forwarding over the PW. This table is stored in hardware for forwarding control, and is referred to as AC hardware forwarding table in the invention. In the AC hardware forwarding table, VPI/VCI and PW Label are used to represent the AC-PW bonding relationship, and AC_Avail_Flag is defined. The format of the AC hardware forwarding table is shown in Table 6.

**Table 6**

| VPI/VCI | PW Label | ..... | AC_Avail_Flag |
|---|---|---|---|
| | | ..... | |
| | | ..... | |

When service forwarding is performed, the table is looked up first according to the VPI/VCI, to determine whether the PW having an AC is available, that is, whether service can be forwarded normally over the PW. For example, if AC_Avail_Flag is equal to 1, the PW is available and packets may be transmitted normally by referring to the PW hardware forwarding table existing in the PE according to the PW label. If AC_Avail_Flag is equal to 0, the packet is discarded.

### III. AC state table

In each PE, an AC state table is added to the host software. The table includes two fields: the local AC state and the peer AC state, indicating the AC states of the local PE and the peer PE respectively. VPI/VCI in the AC state table functions as an index to identify a channel. The AC state table has a format shown in Table 7.

**Table 7**

| VPI/VCI | Local AC state | Peer AC state |
|---|---|---|
| ..... | ..... | ..... |
| ..... | ..... | ..... |

The local AC state is affected by the local AC module. When the local AC state changes, the AC module notifies the host software to change the local AC state in the AC state table. The peer AC state is affected by the AC-OAM packet. When an AC-OAM packet is received, the peer AC state in the AC state table is changed according to the sub-AC state in the packet.

The AC state table affects the AC hardware forwarding table. If both the local AC state and the peer AC state are UP, the host software sets AC_Avail_Flag in the AC hardware forwarding table to 1 so that the PW corresponding to the sub-AC is available. If the local AC state or the peer AC state is DOWN, the host software sets AC_Avail_Flag in the AC hardware forwarding table to 0 so that the PW corresponding to the sub-AC is unavailable and forwarding is not allowed.

### IV. AC state notification process

### 1. AC state notification principle

An AC state notification process may be divided into a transmission process and a reception process. When the AC state of PE1 changes, PE1 modifies the related table entries of the local PE and then sends an AC-OAM packet to PE2 to notify the AC state. Upon receipt of the AC-OAM packet, PE2 parses the packet and modifies the associated table entry according to the content of the packet.

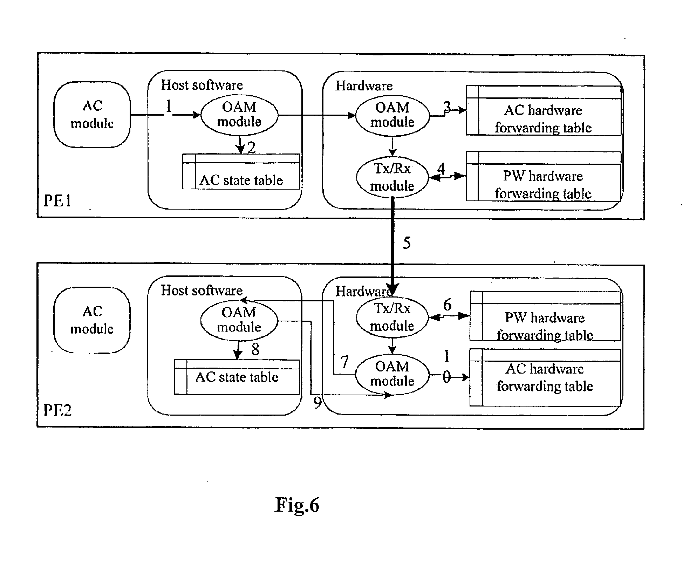

Fig.6 is a diagram illustrating the AC state notification principle according to an embodiment of the invention. The AC state notification principle is as follows. PW is established between PE1 and PE2, and the state of the PW is UP. The host software at both sides generates PW hardware forwarding table entries, which are delivered to the hardware. AC-OAM notification is configured at both PE1 and PE2 so that both PE1 and PE2 have the capability of processing AC-OAM.
(1) When an AC state changes, the AC module notifies the host software of it.
(2) PE1 host software OAM module updates the AC state table, that is, updates the local AC state.
(3) PE1 hardware OAM module updates AC_Avail_Flag in the AC hardware forwarding table.
(4) PE1 hardware looks up the PW hardware forwarding table and assembles an AC-OAM packet.
(5) The AC-OAM packet is transmitted.
(6) PE2 receives the packet, looks up the PW hardware forwarding table, parses the packet and handles it to the hardware OAM module for processing.
(7) PE2 hardware OAM module analyzes the packet, obtains parameters of the packet, and handles it to the software OAM module for processing.
(8) PE2 host software OAM module updates the AC state table according to the sub-AC state in the packet, that is, updates the peer AC state.
(9) PE2 host software OAM module instructs the hardware OAM module to update the AC_Avail_Flag in the AC hardware forwarding table.

With such a notification mechanism, a PE may deterministically know the local AC state and the peer AC state in a service flow. Accordingly, it facilitates acquisition of precise information about the emulated service pair and rejection of the PW UP caused by sub-AC UPs not belonging to the same emulation service pair. In this way, the PW state is strictly consistent with the actual forwarding state, and service transmissions unable to find ultimate connectivity will no longer waste the processing resources of the nodes along the way and the valuable network bandwidth resources.

### 2. The transmission process

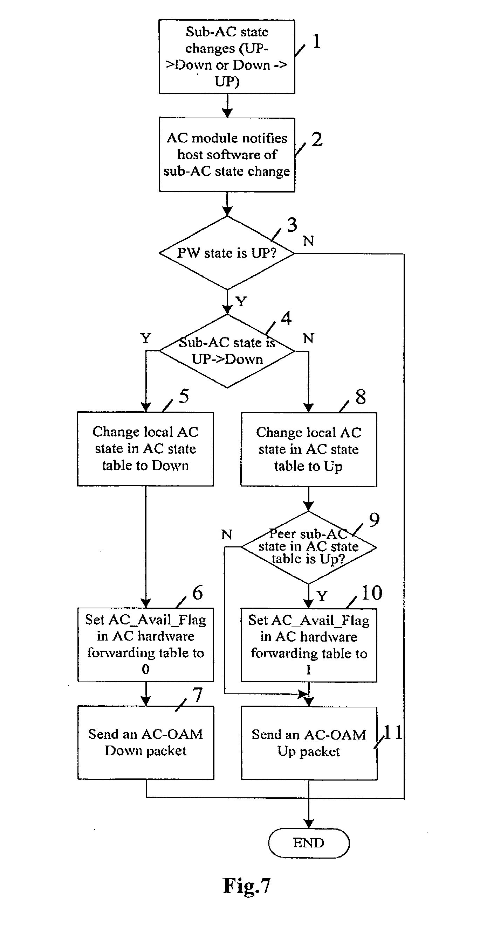

As shown in Fig.7, the flow of the transmission process is as follows.
(1) A sub-AC state changes, for example, changes from Up to Down (denoted as UP->Down) or changes from Down to Up (denoted as Down -> UP).
(2) The AC module notifies the host software of the fact that the sub-AC state changes.
(3) ∼ (4) If the PW state is Up, the host software determines whether the sub-AC state is UP->Down or Down->UP.

If the sub-AC state is UP->Down, steps (5)∼(7) are performed. Here, the local AC state in the AC state table is changed to Down, AC_Avail_Flag in the AC hardware forwarding table is set to abnormal or unavailable state, for example, set to 0, and an AC-OAM Down packet is sent.

If the sub-AC state is Down->UP, steps (8)∼(11) are performed. Here, the local AC state in the AC state table is changed to Up and the peer AC state in the AC state table is also Up. AC_Avail_Flag in the AC hardware forwarding table is set to be normal or available state, for example, set to 1, and an AC-OAM Up packet is sent.

### 3. The reception process

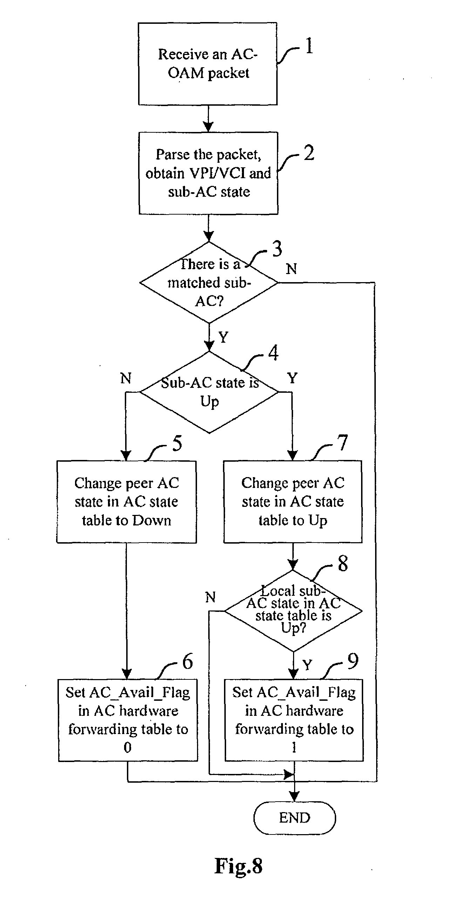

As shown in Fig.8, the flow of the reception process is as follows.
(1) A PE receives an AC-OAM packet.
(2) The packet is parsed, to obtain VPI/VCI and sub-AC state.
(3) A determination is made as to whether there is a matched sub-AC. If the determination is negative, the flow ends. If the determination is positive, the flow proceeds to step (4).
(4) A determination is made as to whether the sub-AC state is Up or Down.

If the sub-AC state is Down, steps (5) and (6) are performed. The peer AC state in the AC state table is changed to Down and AC_Avail_Flag in the AC hardware forwarding table is set to abnormal or unavailable state, for example, set to 0.

If the sub-AC state is Up, steps (7) to (9) are performed. The peer AC state in the AC state table is changed to Up and a determination is made as to whether the local sub-AC state is Up. If yes, AC_Avail_Flag in the AC hardware forwarding table is set to normal or available state, for example, set to 1. Otherwise, the flow ends.

### V. The generality of the AC state notification

The AC state notification mechanism based on AC-OAM is not limited to the N to 1 mode of ATM PWE3. It is equally applicable to other PWE3 services, such as Eth/TDM/FR. In ATM PWE3, VPI/VCI may be used to identify a specific pair of services. Similarly, VLAN ID in Eth PWE3 may be used to identify a specific pair of services. VPI/VCI in the AC-OAM packet and the AC hardware forwarding table are replaced with a corresponding service identifier, for example, Eth VLAN ID. In this way, the AC state notification based on OAM packets may be used on the PW service emulation links.

A more universal approach is to identify a specific pair of services by using general sub-AC identifiers. That is, AC-ID is used to represent VPI/VCI in ATM, VLAN ID in Eth and so on, and a mapping relationship is established between the AC-ID and the specific pair of services. In this way, the AC hardware forwarding table has a format shown in Table 8.

**Table 8**

| **AC-ID** | PW Label | ..... | AC_Avail_Flag |
|---|---|---|---|
| | | ..... | |
| | | ..... | |

In this manner, only one AC hardware forwarding table may be maintained. The relationship between AC and PW is more straightforward. The service configuration commands for bonding AC and PW are simpler, and the configuration amount reduces by a half. The hardware implementation is relatively simpler. Information about a specific PVC may be determined by linearly looking up the index corresponding to the AC-ID, so that the forwarding speed may be improved.

As shown in Fig.6, the invention also provides a PE based on the AC connection state notification method in a packet switching network, including an AC circuit module, a transmitting/receiving module and an OAM module coupled to the AC circuit module and the transmitting/receiving module. The AC circuit module is configured to notify the OAM module of a change in the sub-AC state. The OAM module is configured to operate the transmitting/receiving module to transmit an OAM packet carrying fields for sub-AC identifications and sub-AC states to notify the peer.

The PE further includes a sub-AC hardware forwarding table module coupled to the OAM module. The correspondence among the sub-AC ID, the state and PW is established in the sub-AC hardware forwarding table module. The normal state for the sub-AC is valid when the sub-AC states at both sides are normal. The sub-AC is in abnormal state when the local sub-AC state or the peer sub-AC state is abnormal. In traffic forwarding, the OAM module refers the sub-AC hardware forwarding table module for an associated sub-AC state. When the sub-AC is normal, the transmitting/receiving module performs forwarding with the associated PW. The forwarding is performed by looking up the PW hardware forwarding table.

The PE further includes a sub-AC state table module coupled to the OAM module, configured to record the local sub-AC state and the peer sub-AC state, so as to reflect the availability of the sub-AC.

The above two methods for determining PW connection state and for notifying AC connection state and the associated PEs may be employed separately or in combination.

The invention has been described with reference to specific embodiments, but various modifications are possible to accommodate particular requirements when the invention is practiced. Accordingly, it is to be understood that the specific embodiments are just illustrative, instead of limiting the scope of the invention.

## Claims

1. A method for determining Pseudo Wire, PW, connection state in a packet switching network, the packet switching network being provided with Pseudo Wire Operation, Administration, and Maintenance, PW-OAM, packets for detection of connection state of a PW, the method **characterized by** the steps of:
transmitting, by a first PE, a PW-OAM request packet over a PW link between the first PE and a second PE, wherein the PW-OAM request packet contains three layers of labels and a PW OAM packet, the outer layer being an LSP label, the middle layer being a PW label, the inner layer being an OAM label, the LSP label being used for a pop operation and the PW label being used for a swap operation;
receiving, by the second PE, the PW-OAM request packet;
performing a pop operation on the LSP label, and looking up a hardware Incoming Label Map, ILM, table with the PW label;
determining whether the PW is configured with OAM function according to an OAM flag added to the ILM table, the OAM flag indicating whether an associated PW is configured with OAM function;
processing all the forwarding normally if the PW is not configured with OAM function;
determining whether the next layer of label exists if the PW is configured with OAM function;
if the next layer of label exists and is a stack-bottom label with a value equal to 14 to indicate that the captured packet is a PW-OAM packet, performing a swap operation on the PW-OAM packet, so as to obtain new LSP and PW labels;
sending, by the second PE, the PW OAM packet back to the first PE via the new LSP and PW labels;
detecting, by the first PE, whether a PW-OAM reply packet is received within a preset time period, wherein the PW-OAM reply packet assembles the PW OAM packet; and
determining, by the first PE, that the PW between the first PE and the second PE is normal when the PW-OAM reply packet is received within a preset time period.

2. The method for determining PW connection state in a packet switching network according to claim 1, further comprising:
notifying the second PE via an Attachment Circuit Operation, Administration, and Maintenance, AC-OAM, packet when the sub-AC state of the first PE changes, the AC-OAM packet carrying fields for sub-AC identifications and sub-AC states.

3. The method for determining PW connection state in a packet switching network according to claim 1 or 2, wherein a PW availability flag is set in a PW hardware forwarding table to constrain the forwarding of a data packet, the PW availability flag being controlled based on the detection result, and
the data packet is forwarded normally when the PW availability flag is set to indicate that the PW is available; and
the data packet is not forwarded when the PW availability flag is set to indicate that the PW is unavailable.

4. The method for determining PW connection state in a packet switching network according to claim 1, wherein the second PE performs the swap operation on the PW label by:
establishing a swap table entry for the inner-layer label and delivering the swap table entry to hardware; and
performing a swap operation with the table entry after capturing the PW OAM packet.

5. A Provider Equipment, PE, adapted to perform all method steps according to claim 1 in a packet switching network, the packet switching network being provided with PW-OAM packets for detection of connection state of a PW, the PE comprising:
a transmitting module;
a receiving module;
**characterized by**
an OAM module coupled to the transmitting module and the receiving module, configured to operate the transmitting module to transmit a PW-OAM request packet, wherein the PW-OAM request packet contains three layers of labels and a PW OAM packet, the outer layer being an LSP label, the middle layer being a PW label, the inner layer being an OAM label, the LSP label being used for a pop operation and the PW label being used for a swap operation;
wherein a packet is received by the receiving module and delivered to the OAM module for processing, if the OAM module determines that the received packet is a PW-OAM reply packet of the PW-OAM request packet that is received within a preset time period, the PW between the PEs is determined to be normal, wherein the PW-OAM reply packet assembles the PW OAM packet.

6. A Provider Equipment, PE, adapted to perform all method steps according to claim 1 in a packet switching network, the packet switching network being provided with PW-OAM packets for detection of connection state of a PW, the PE comprising:
a transmitting module;
a receiving module; **characterized by**
an OAM module coupled to the transmitting module,
wherein a PW-OAM request packet is received by the receiving module and delivered to the OAM module for processing, wherein the PW-OAM request packet contains three layers of labels and a PW OAM packet, the outer layer being an LSP label, the middle layer being a PW label, the inner layer being an OAM label, the LSP label being used for a pop operation and the PW label being used for a swap operation; and
the OAM module is configured to operate the transmitting module to return the PW-OAM reply packet to the transmitting side, wherein the PW-OAM reply packet assembles the PW OAM packet.

7. A packet switching network comprising at least two Provider Equipments, PEs, the packet switching network is provided with Pseudo Wire Operation, Administration, and Maintenance, PW-OAM, packets for detection of connection state of a PW,
a first PE is adapted to transmit a PW-OAM request packet over a PW link between the first PE and a second PE, **characterized in that** the PW-OAM request packet contains three layers of labels and a PW OAM packet, the outer layer being an LSP label, the middle layer being a PW label, the inner layer being an OAM label, the LSP label being used for a pop operation and the PW label being used for a swap operation;
the second PE is adapted to:
receive the PW-OAM request packet,
perform a pop operation on the LSP label, and look up an hardware Incoming Label Map, ILM, table with the PW label;
determine whether the PW is configured with OAM function according to an OAM flag added to the hardware ILM table, the OAM flag indicating whether an associated PW is configured with OAM function;
process all the forwarding normally if the PW is not configured with OAM function;
determine whether the next layer of label exists if the PW is configured with OAM function;
if the next layer of label exists and is a stack-bottom label with a value equal to 14 to indicate that the captured packet is a PW-OAM packet, perform a swap operation on the PW-OAM packet, so as to obtain new LSP and PW labels;
send the PW OAM packet back to the first PE via the new LSP and PW labels; and
the first PE is adapted to detect whether the PW-OAM reply packet is received within a preset time period, and to determine that the PW between the first PE and the second PE is normal when the PW-OAM reply packet is received within a preset time period.

## Patentansprüche

1. Verfahren zum Bestimmen des Verbindungszustands einer Pseudo Wire PW in einem Paketvermittlungsnetz, wobei das Paketvermittlungsnetz mit Paketen der Pseudo Wire Operation, Administration, and Maintenance PW-OAM zur Detektion des Verbindungszustands einer PW ausgestattet ist, wobei das Verfahren durch die folgenden Schritte **gekennzeichnet** ist:
ein erstes PE überträgt ein PW-OAM-Anforderungspaket über eine PW-Strecke zwischen dem ersten PE und einem zweiten PE, wobei das PW-OAM-Anforderungspaket drei Schichten von Labels und ein PW-OAM-Paket enthält, wobei die äußere Schicht ein LSP-Label, die mittlere Schicht ein PW-Label und die innere Schicht ein OAM-Label ist und das LSP-Label für eine Pop-Operation und das PW-Label für eine Swap-Operation verwendet wird;
das zweite PE empfängt das PW-OAM-Anforderungspaket;
Durchführen einer Pop-Operation an dem LSP-Label und Nachschlagen einer Hardwaretabelle der Incoming Label Map ILM mit dem PW-Label;
Bestimmen, ob die PW mit OAM-Funktion konfiguriert ist, gemäß einem zu der ILM-Tabelle hinzugefügten OAM-Flag, wobei das OAM-Flag angibt, ob eine assoziierte PW mit OAM-Funktion konfiguriert ist;
normales Verarbeiten der gesamten Weiterleitung, wenn die PW nicht mit OAM-Funktion konfiguriert ist;
Bestimmen, ob die nächste Labelschicht existiert, wenn die PW mit OAM-Funktion konfiguriert ist;
wenn die nächste Labelschicht existiert und ein Stack-Bottom-Label mit einem Wert gleich 14 ist, um anzugeben, dass das erfasste Paket ein PW-OAM-Paket ist, Ausführen einer Swap-Operation an dem PW-OAM-Paket, um so neue LSP- und PW-Labels zu erhalten;
das zweite PE sendet das PW-OAM-Paket zurück zu dem ersten PE über die neuen LSP- und PW-Labels;
das erste PE detektiert, ob innerhalb eines voreingestellten Zeitraums ein PW-OAM-Antwortpaket empfangen wird, wobei das PW-OAM-Antwortpaket das PW-OAM-Paket assembliert; und
das erste PE bestimmt, dass die PW zwischen dem ersten PE und dem zweiten PE normal ist, wenn das PW-OAM-Antwortpaket innerhalb eines voreingestellten Zeitraums empfangen wird.

2. Verfahren zum Bestimmen des PW-Verbindungszustands in einem Paketvermittlungsnetz nach Anspruch 1, ferner mit dem folgenden Schritt:
Benachrichtigen des zweiten PE über ein Paket der Attachment Circuit Operation, Administration, and Maintenance AC-OAM, wenn sich der Sub-AC-Zustand des ersten PE ändert, wobei das AC-OAM-Paket Felder für Sub-AC-Identifikationen und Sub-AC-Zustände führt.

3. Verfahren zum Bestimmen des PW-Verbindungszustands in einem Paketvermittlungsnetz nach Anspruch 1 oder 2, wobei in einer PW-Hardware-Weiterleitungstabelle ein PW-Verfügbarkeits-Flag gesetzt wird, um das Weiterleiten eines Datenpakets einzuschränken, wobei das PW-Verfügbarkeits-Flag auf der Basis des Detektionsergebnisses gesteuert wird; und
das Datenpaket normal weitergeleitet wird, wenn das PW-Verfügbarkeits-Flag so gesetzt ist, dass es angibt, dass die PW verfügbar ist; und
das Datenpaket nicht weitergeleitet wird, wenn das PW-Verfügbarkeits-Flag so gesetzt ist, dass es angibt, dass die PW nicht verfügbar ist.

4. Verfahren zum Bestimmen des PW-Verbindungszustands in einem Paketvermittlungsnetz nach Anspruch 1, wobei das zweite PE die Swap-Operation an dem PW-Label durch die folgenden Schritte ausführt:
Herstellen eines Swap-Tabelleneintrags für das Label der inneren Schicht und Abliefern des Swap-Tabelleneintrags an Hardware; und
Ausführen einer Swap-Operation mit dem Tabelleneintrag nach dem Erfassen des PW-OAM-Pakets.

5. Provider-Gerät PE, das dafür ausgelegt ist, alle Verfahrensschritte nach Anspruch 1 in einem Paketvermittlungsnetz auszuführen, wobei das Paketvermittlungsnetz mit PW-OAM-Paketen zur Detektion eines Verbindungszustands einer PW ausgestattet ist, wobei das PE Folgendes umfasst:
ein sendendes Modul;
ein empfangendes Modul; **gekennzeichnet durch**
ein mit dem sendenden Modul und dem empfangenden Modul gekoppeltes OAM-Modul, das dafür ausgelegt ist, das sendende Modul zu betreiben, um ein PW-OAM-Anforderungspaket zu senden, wobei das PW-OAM-Anforderungspaket drei Schichten von Labels und ein PW-OAM-Paket enthält, wobei die äußere Schicht ein LSP-Label, die mittlere Schicht ein PW-Label und die innere Schicht ein OAM-Label ist und das LSP-Label für eine Pop-Operation und das PW-Label für eine Swap-Operation verwendet wird;
wobei ein Paket **durch** das empfangende Modul empfangen und zur Verarbeitung an das OAM-Modul abgeliefert wird, wenn das OAM-Modul bestimmt, dass das empfangene Paket ein PW-OAM-Antwortpaket des PW-OAM-Anforderungspakets ist, das innerhalb eines voreingestellten Zeitraums empfangen wird, die PW zwischen den PE als normal bestimmt wird, wobei das PW-OAM-Antwortpaket das PW-OAM-Paket assembliert.

6. Provider-Gerät PE, das dafür ausgelegt ist, alle Verfahrensschritte nach Anspruch 1 in einem Paketvermittlungsnetz auszuführen, wobei das Paketvermittlungsnetz mit PW-OAM-Paketen zur Detektion eines Verbindungszustands einer PW ausgestattet ist, wobei das PE Folgendes umfasst:
ein sendendes Modul;
ein empfangendes Modul; **gekennzeichnet durch**
ein mit dem sendenden Modul gekoppeltes OAM-Modul,
wobei ein PW-OAM-Anforderungspaket **durch** das empfangende Modul empfangen und zur Verarbeitung an das OAM-Modul abgeliefert wird, wobei das PW-OAM-Anforderungspaket drei Schichten von Labels und ein PW-OAM-Paket enthält, wobei die äußere Schicht ein LSP-Label, die mittlere Schicht ein PW-Label und die innere Schicht ein OAM-Label ist, wobei das LSP-Label für eine Pop-Operation und das PW-Label für eine Swap-Operation verwendet wird; und
das OAM-Modul dafür ausgelegt ist, das sendende Modul zu betätigen, um das PW-OAM-Antwortpaket zu der sendenden Seite zurückzugeben, wobei das PW-OAM-Antwortpaket das PW-OAM-Paket assembliert.

7. Paketvermittlungsnetz, das mindestens zwei Provider-Geräte PE umfasst, wobei das Paketvermittlungsnetz mit Paketen der Pseudo Wire Operation, Administration, and Maintenance PW-OAM zur Detektion eines Verbindungszustands einer PW ausgestattet ist,
ein erstes PE dafür ausgelegt ist, ein PW-OAM-Anforderungspaket über eine PW-Strecke zwischen dem ersten PE und einem zweiten PE zu übertragen, **dadurch gekennzeichnet, dass** das PW-OAM-Anforderungspaket drei Schichten von Labels und ein PW-OAM-Paket enthält, wobei die äußere Schicht ein LSP-Label, die mittlere Schicht ein PW-Label und die innere Schicht ein OAM-Label ist und das LSP-Label für eine Pop-Operation und das PW-Label für eine Swap-Operation verwendet wird;
das zweite PE für Folgendes ausgelegt ist:
Empfangen des PW-OAM-Anforderungspakets,
Ausführen einer Pop-Operation an dem LSP-Label und Nachschlagen einer Hardware-Tabelle der Incoming Label Map ILM mit dem PW-Label; Bestimmen, ob die PW mit OAM-Funktion konfiguriert ist, gemäß einem zu der ILM-Hardwaretabelle hinzugefügten OAM-Flag, wobei das OAM-Flag angibt, ob eine assoziierte PW mit OAM-Funktion konfiguriert ist;
normales Verarbeiten der Weiterleitung, wenn die PW nicht mit OAM-Funktion konfiguriert ist;
Bestimmen, ob die nächste Labelschicht existiert, wenn die PW mit OAM-Funktion konfiguriert ist;
wenn die nächste Labelschicht existiert und ein Stack-Bottom-Label mit einem Wert gleich 14 ist, um anzugeben, dass das erfasste Paket ein PW-OAM-Paket ist, Ausführen einer Swap-Operation an dem PW-OAM-Paket, um so neue LSP- und PW-Labels zu erhalten;
Zurücksenden des PW-OAM-Pakets zu dem ersten PE über die neuen LSP- und PW-Labels;
und
das erste PE dafür ausgelegt ist, zu detektieren, ob das PW-OAM-Antwortpaket innerhalb eines voreingestellten Zeitraums empfangen wird, und zu bestimmen, dass die PW zwischen dem ersten PE und dem zweiten PE normal ist, wenn das PW-OAM-Antwortpaket innerhalb eines voreingestellten Zeitraums empfangen wird.

## Revendications

1. Procédé de détermination de l'état de connexion d'un pseudo-câble, PW, dans un réseau à commutation de paquets, le réseau à commutation de paquets étant pourvu de paquets PW-OAM (Opération, Administration et Maintenance de pseudo-câble) qui servent à détecter l'état de connexion d'un PW, le procédé étant **caractérisé par** les étapes consistant à :
assurer la transmission, par un premier équipement d'opérateur (PE), d'un paquet de demande PW-OAM par l'intermédiaire d'une liaison PW entre le premier PE et un deuxième PE, cas dans lequel le paquet de demande PW-OAM contient trois couches de labels et un paquet PW-OAM, la couche externe étant un label LSP (chemin commuté par labels), la couche centrale étant un label PW, la couche interne étant un label OAM, le label LSP étant utilisé pour une opération PoP (point de présence) et le label PW étant utilisé pour une opération Swap (permutation) ;
assurer la réception, par le deuxième équipement d'opérateur (PE), du paquet de demande PW-OAM ;
effectuer une opération PoP sur le label LSP, et consulter une table ILM (grille de labels d'entrée) du matériel avec le label PW ;
déterminer si le PW est configuré ou non avec la fonction OAM, suivant un marqueur OAM ajouté à la table ILM, le marqueur OAM indiquant si un PW associé est configuré ou non avec la fonction OAM ;
traiter l'ensemble de l'acheminement normal si le PW n'est pas configuré avec la fonction OAM ;
déterminer si la prochaine couche de label existe ou non, dans le cas où le PW est configuré avec la fonction OAM ;
si la prochaine couche de label existe et est un label de fond d'empilement avec une valeur égale à 14 pour indiquer que le paquet saisi est un paquet PW-OAM, effectuer une opération Swap sur le paquet PW-OAM de sorte à obtenir de nouveaux labels LSP et PW ;
envoyer, par le deuxième PE, le paquet PW-OAM pour le faire revenir au premier PE via les nouveaux labels LSP et PW ;
détecter, par le premier PE, si un paquet de réponse PW-OAM est reçu ou non dans les limites d'un intervalle de temps préréglé, cas dans lequel le paquet de réponse PW-OAM effectue l'assemblage du paquet PW-OAM ; et
déterminer, par le premier PE, que le PW entre le premier PE et le deuxième PE est normal lorsque le paquet de réponse PW-OAM est reçu dans les limites d'un intervalle de temps préréglé.

2. Procédé de détermination de l'état de connexion d'un pseudo-câble, PW, dans un réseau à commutation de paquets, selon la revendication 1, comprenant en outre l'étape consistant à :
notifier le deuxième PE, par l'intermédiaire d'un paquet AC-OAM (Opération, Administration et Maintenance de circuit de rattachement) du moment auquel se produit le changement de l'état sous-AC sur le premier PE, le paquet AC-OAM portant des champs pour les identifications des sous-AC et les états des sous-AC.

3. Procédé de détermination de l'état de connexion d'un pseudo-câble, PW, dans un réseau à commutation de paquets, selon la revendication 1 ou 2, le marqueur de disponibilité de PW étant défini dans une table d'acheminement de matériel de PW afin de limiter l'acheminement d'un paquet de données, alors que le marqueur de disponibilité de PW est piloté en fonction du résultat de la détection, et
le paquet de données est acheminé normalement lorsque le marqueur de disponibilité de PW est défini de façon à indiquer que le PW est disponible ; et le paquet de données n'est pas acheminé lorsque le marqueur de disponibilité de PW est défini de façon à indiquer que le PW est indisponible.

4. Procédé de détermination de l'état de connexion d'un pseudo-câble, PW, dans un réseau à commutation de paquets, selon la revendication 1, le deuxième PE effectuant l'opération Swap sur le label PW grâce aux étapes consistant à :
établir une entrée de la table Swap pour le label de la couche interne et délivrer au matériel l'entrée de la table Swap ; et
effectuer une opération Swap avec l'entrée de la table après avoir saisi le paquet PW-OAM.

5. Equipement d'opérateur, PE, conçu pour exécuter toutes les étapes du procédé selon la revendication 1, dans un réseau à commutation de paquets, le réseau à commutation de paquets étant pourvu de paquets PW-OAM pour détecter l'état de connexion d'un PW, le PE comprenant :
un module transmetteur ;
un module récepteur ;
**caractérisé par le fait**
**qu'**un module OAM, couplé au module transmetteur et au module récepteur, est configuré de façon à opérer le module transmetteur pour qu'il transmette un paquet de demande PW-OAM, cas dans lequel le paquet de demande PW-OAM contient trois couches de labels et un paquet PW-OAM, la couche externe étant un label LSP, la couche centrale étant un label PW, la couche interne étant un label OAM, le label LSP étant utilisé pour une opération PoP et le label PW étant utilisé pour une opération Swap ;
cas dans lequel un paquet est reçu par le module récepteur et est délivré au module OAM à des fins de traitement, si le module OAM a déterminé que le paquet reçu est un paquet de réponse PW-OAM associé au paquet de demande PW-OAM qui est reçu dans les limites d'un intervalle de temps préréglé, le PW entre les PE est considéré comme étant normal, cas dans lequel le paquet de réponse PW-OAM effectue l'assemblage du paquet PW-OAM.

6. Equipement d'opérateur, PE, conçu pour exécuter toutes les étapes du procédé selon la revendication 1, dans un réseau à commutation de paquets, le réseau à commutation de paquets étant pourvu de paquets PW-OAM pour détecter l'état de connexion d'un PW, le PE comprenant :
un module transmetteur ;
un module récepteur ; **caractérisé par le fait**
**qu'**un module OAM est couplé au module transmetteur,
cas dans lequel un paquet de demande PW-OAM est reçu par le module récepteur et est délivré au module OAM à des fins de traitement, cas dans lequel le paquet de demande PW-OAM contient trois couches de labels et un paquet PW-OAM, la couche externe étant un label LSP, la couche centrale étant un label PW, la couche interne étant un label OAM, le label LSP étant utilisé pour une opération PoP et le label PW étant utilisé pour une opération Swap ; et
le module OAM est configuré de façon à opérer le module transmetteur pour qu'il renvoie au côté transmetteur le paquet de réponse PW-OAM, cas dans lequel le paquet de réponse PW-OAM effectue l'assemblage du paquet PW-OAM.

7. Réseau à commutation de paquets comprenant au moins deux équipements d'opérateur, PE, le réseau à commutation de paquets étant pourvu de paquets PW-OAM (Opération, Administration et Maintenance de pseudo-câble) qui servent à détecter l'état de connexion d'un PW,
un premier PE étant conçu pour transmettre un paquet de demande PW-OAM par l'intermédiaire d'une liaison PW entre le premier PE et le deuxième PE, **caractérisé en ce que** le paquet de demande PW-OAM contient trois couches de labels et un paquet PW-OAM, la couche externe étant un label LSP, la couche centrale étant un label PW, la couche interne étant un label OAM, le label LSP étant utilisé pour une opération PoP et le label PW étant utilisé pour une opération Swap ;
le deuxième PE étant conçu pour :
recevoir le paquet de demande PW-OAM,
effectuer une opération PoP sur le label LSP, et consulter une table ILM (grille de labels d'entrée) du matériel avec le label PW ;
déterminer si le PW est configuré ou non avec la fonction OAM, suivant un marqueur OAM ajouté à la table ILM de matériel, le marqueur OAM indiquant si un PW associé est configuré ou non avec la fonction OAM ;
traiter l'ensemble de l'acheminement normal si le PW n'est pas configuré avec la fonction OAM ;
déterminer si la prochaine couche de label existe ou non, dans le cas où le PW est configuré avec la fonction OAM ;
si la prochaine couche de label existe et est un label de fond d'empilement avec une valeur égale à 14 pour indiquer que le paquet saisi est un paquet PW-OAM, effectuer une opération Swap sur le paquet PW-OAM de sorte à obtenir de nouveaux labels LSP et PW ;
envoyer le paquet PW-OAM pour le faire revenir au premier PE via les nouveaux labels LSP et PW ; et
le premier PE étant conçu pour détecter si un paquet de réponse PW-OAM est reçu ou non dans les limites d'un intervalle de temps préréglé, et pour déterminer que le PW entre le premier PE et le deuxième PE est normal lorsque le paquet de réponse PW-OAM est reçu dans les limites d'un intervalle de temps préréglé.
